# EUROPEAN PATENT APPLICATION

(11) **EP 4 808 148 A1**
(43) Date of publication of application: **16.09.2026**
(21) Application number: 24888279.7
(22) Date of filing: 18.06.2024
(51) Int. Cl.: H04Q 9/00, G08C 15/00, G08C 15/06, G08C 17/00

(54) **REMOTE MANAGEMENT SYSTEM AND METHOD FOR OBJECT**

(30) Priority: 09.11.2023 JP 2023191302
(71) Applicant: The Yokohama Rubber Co., Ltd., Hiratsuka-shi, Kanagawa 254-8601 (JP)
(72) Inventor: ISHIBASHI Yusuke, Hiratsuka-shi, Kanagawa 254-8601 (JP)
(74) Representative: Grünecker Patent- und Rechtsanwälte PartG mbB
(86) International application number: PCT/JP2024/022012
(87) International publication number: WO 2025/099977

(57) **Abstract**

Provided is a remote management system and method capable of determining a state of an object, such as a fender, more reliably while avoiding restrictions on wireless communication and capable of reducing energy consumption in a determining step. A sensor (2) and a transceiver (3) operated by a battery (4) are installed on each fender (9). When detection data (M) detected by each sensor 2 are transmitted from the transceiver (3) to a relay device (5A) by a radio wave (W), communication based on a predetermined LPWA communication standard is used. When a communication strength (S) between each transceiver (3) and the relay device (5A) is equal to or greater than a reference value (Sc), the detection data M are transmitted through a direct route (Rd) from each transceiver (3) to the relay device 5A. When the communication strength (S) is less than the reference value (Sc), the detection data (M) are transmitted through an indirect route (Rb) in which another transceiver (3) is interposed between each transceiver (3) and the relay device (5A). A management indicator based on the detection data is stored in a server (5B), and the management indicator is displayed on specific devices (6a, 6b, and 6c) capable of accessing the server (5B).

## Description

### Technical Field

The present invention relates to a remote management system and method for an object and particularly relates to a remote management system and method for an object capable of, in determining states of a plurality of objects, such as fenders, by wireless communication, determining the state of each object more reliably while avoiding restrictions on wireless communication and capable of reducing energy consumption in a determining step of determining states of the respective objects.

### Background Art

Various monitoring systems have been proposed in which detection data of a pressure sensor installed inside a pneumatic fender is acquired by a wireless communication unit, and a state of the pneumatic fender is determined based on the acquired detection data (internal pressure data) (for example, see Patent Documents 1 and 2). In these monitoring systems, power of a battery arranged in the fender is used to operate the pressure sensor and to perform wireless communication. Since the battery arranged in the fender cannot be frequently replaced, reducing the power consumption of the battery is necessary. However, reducing the power consumption of the battery and lowering the frequencies of wireless communication and detection-data acquisition are disadvantageous to accurately determining the state of the fender.

In general, since a plurality of fenders are arranged in one region, a communication distance to a fender arranged at a position far from a wireless communication unit increases, so that wireless communication may not be performed, or battery power consumption for wireless communication may become excessive. Therefore, in order to secure stable wireless communication, it is necessary to move the wireless communication unit to a position close to each fender. However, for example, when a ship or the like on which the wireless communication unit is installed is moved in order to bring the wireless communication unit close to a large number of fenders installed on facilities at sea, a corresponding amount of fuel is consumed. In this way, determining states of respective fenders arranged in a wide area more reliably increases energy consumption of a battery, fuel, or the like. Furthermore, wireless communication has various restrictions (legal regulations). Such problems of an increase in energy consumption and restrictions on wireless communication are not limited to pneumatic fenders and also occur when marine hoses and belt conveyor devices are monitored. Therefore, determining a state of an object more reliably while avoiding restrictions on wireless communication and further reducing energy consumption in a determining process need a special measure.

### Citation List

### Patent Literature

Patent Document 1: JP 2010-175298 A
Patent Document 2: JP 2010-266365 A

### Summary of Invention

### Technical Problem

An object of the present invention is to provide a remote management system and method for an object capable of, in determining states of a plurality of objects such as fenders by wireless communication, determining the state of each object more reliably while avoiding restrictions on wireless communication and capable of reducing energy consumption in a determining step of determining states of the respective objects.

### Solution to Problem

To achieve the object described above, a remote management system for an object according to an embodiment of the present invention includes: a sensor and a transceiver installed on an object; and a relay device connected to a communication network. Communication based on a predetermined LPWA communication standard is performed between the transceiver and the relay device. The sensor and the transceiver are operated by a battery. Detection data indicating a state of the object detected by the sensor are transmitted by the transceiver to the relay device and transmitted to the communication network via the relay device. The management indicator based on the detection data is displayed on a specific device connected to the communication network. The sensor and the transceiver are installed on each of a plurality of the objects. A transmission route for the detection data from each transceiver to the relay device is set such that a direct route from each transceiver to the relay device is selected when a communication strength between each transceiver and the relay device is equal to or greater than a preset reference value and that the transmission route is selected from indirect routes in which at least one other transceiver is interposed between each transceiver and the relay device when the communication strength is less than the reference value.

A remote management method for an object according to an embodiment of the present invention includes: installing a sensor and a transceiver on an object, performing communication based on a predetermined LPWA communication standard between the transceiver and a relay device connected to a communication network; operating the sensor and the transceiver by a battery; transmitting detection data detected by the sensor and indicating a state of the object to the relay device by the transceiver; transmitting the detection data to the communication network via the relay device; and displaying a management indicator based on the detection data on a specific device connected to the communication network. The method includes: installing the sensor and the transceiver on each of a plurality of the objects; for a transmission route for the detection data from each transceiver to the relay device selecting a direct route from each transceiver to the relay device when a communication strength between each transceiver and the relay device is equal to or greater than a preset reference value; and selecting an indirect route in which at least one other transceiver is interposed between each transceiver and the relay device when the communication strength is less than the reference value.

### Advantageous Effects of Invention

According to an embodiment of the present invention, since communication based on a predetermined LPWA communication standard is performed between a transceiver installed on each object and a relay device connected to a communication network, and detection data detected by a sensor installed on each object are transmitted to the relay device by the transceiver, it is possible to avoid restrictions on wireless communication between each transceiver and the relay device. Since the direct route or the indirect route is selected as each transmission route for the detection data from each transceiver to the relay device, based on the communication strength between the two devices, the power consumption of the battery installed on each object can be suppressed. Since the necessity of moving the relay device close to each transceiver in order to secure stable wireless communication with the relay device is reduced, fuel consumption for such close movement is also suppressed. Therefore, it is possible to determine a state of each object more reliably while reducing energy consumption in a determining step of determining the state of each object.

### Brief Description of Drawings

FIG. 1 is an explanatory diagram illustrating an entire outline of a remote management system for an object.
FIG. 2 is an explanatory diagram illustrating a fender anchored on a quay in a top view.
FIG. 3 is an explanatory view schematically illustrating a state in which detection data detected by a sensor of FIG. 2 are transmitted through a direct route between a transceiver installed on the fender and a relay device.
FIG. 4 is an explanatory view schematically illustrating a state in which detection data detected by the sensor of FIG. 2 are transmitted through an indirect route between the transceiver installed on the fender and the relay device.
FIG. 5 is an explanatory diagram illustrating a hose line having a plurality of connected marine hoses in a plan view.
FIG. 6 is an explanatory diagram illustrating a conveyor belt device including a belt support mechanism in a plan view.
FIG. 7 is an explanatory diagram illustrating the conveyor belt device of FIG. 6 in a belt cross-sectional view.

### Description of Embodiments

A management system and method for an object according to an embodiment of the present invention will be described below with reference to the drawings.

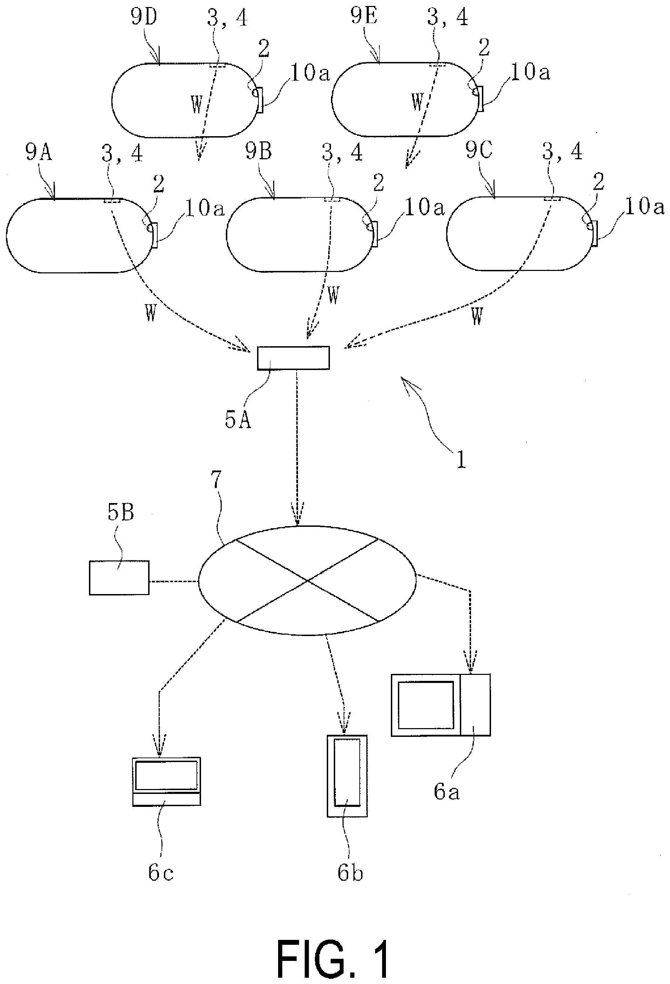

An embodiment of a remote management system 1 for an object (hereinafter referred to as a system 1) illustrated in FIG. 1 uses wireless communication to determine a state of a pneumatic fender 9 (9A, 9B, 9C, 9D, 9E). Therefore, an object that is managed by the system 1 is the pneumatic fender 9 (hereinafter referred to as a fender 9).

The fender 9 is a hollow body made of rubber in which a reinforcing layer is embedded, and various known specifications in which gas (air) is sealed inside may be used. The fender 9 has a mouthpiece 10a at one end portion in an axial direction, and the mouthpiece 10a is provided with a communication port with the inside and valves. The mouthpiece 10a may be provided at both end portions in the axial direction of the fender 9.

The system 1 includes a sensor 2 and a transceiver 3 installed on each fender 9, and a relay device 5A connected to a communication network 7. Each fender 9 is provided with a battery 4, since the sensor 2 and the transceiver 3 are operated by the battery 4. The battery 4 may employ various known specifications, such as a lithium battery. Examples of the communication network 7 include an Internet communication network and a specific LAN such as an in-house LAN. In this embodiment, a server 5B is communicably connected to the communication network 7.

Communication based on a predetermined LPWA (Low Power Wide Area) communication standard is performed between each transceiver 3 and the relay device 5A. Examples of LPWA include unlicensed band LoRaWAN, Sigfox, Wi-SUN, ELTRES, and ZETA, and licensed band NB-IoT, LTE-M, and LTE Cat.1. In this embodiment, communication based on an unlicensed band LPWA communication standard is performed between each transceiver 3 and the relay device 5A, and communication based on the LoRaWAN communication standard is particularly preferable. Between the relay device 5A and the communication network 7, for example, communication based on the licensed band LPWA communication standard described above is performed.

The sensor 2 includes a detection unit, a storage unit, and a control unit, and the detection unit acquires detection data M indicating a state of the fender 9. The acquired detection data M are stored in the storage unit, and the control unit controls an operation of the sensor 2 (acquisition timing of the detection data M, and the like). Examples of the detection data M include internal pressure data, internal temperature data, and position data of the fender 9, and acceleration data acting on the fender 9.

Therefore, examples of the sensor 2 installed on the fender 9 include a pressure sensor that detects an internal pressure of the fender 9, a temperature sensor that detects an internal temperature, a position sensor such as a GPS receiver that detects a position of the fender 9, and an acceleration sensor that detects an acceleration (external force) acting on the fender 9. The detection data M of the internal pressure data, the internal temperature data, the position data, and the acceleration data indicate states of internal pressure, temperature, position, and external load of the fender 9, respectively. One or more types of these sensors 2 are installed on the fender 9. The sensor 2 may employ various known specifications.

In this embodiment, the sensor 2 is attached to the mouthpiece 10a, but may be attached at another desired position. For example, the sensor 2 may be attached to an inner surface of a wall body of the fender 9 or may be embedded in the wall body.

Each transceiver 3 may employ various known specifications capable of enabling communication based on an unlicensed-band LPWA communication standard with the relay device 5A. In this embodiment, the battery 4 is arranged adjacent to the transceiver 3, the transceiver 3 and the battery 4 are connected by a substrate circuit, and the sensor 2 and the battery 4 are connected by a lead wire. A length of the lead wire can be minimized by arranging the sensor 2 and the transceiver 3 at close places and arranging the battery 4 adjacent to the two.

The relay device 5A has a function of connecting each transceiver 3 to the server 5B via the communication network 7. Therefore, the relay device 5A may employ a gateway device of various known specifications capable of enabling connection between communication based on an unlicensed-band LPWA communication standard and the communication network 7.

A specific device 6 (6a, 6b, 6c), such as a personal computer, a tablet terminal device, and a smartphone, is communicably connected to the communication network 7. The server 5B is arranged in a management office or the like responsible for management of the fenders 9, but a cloud server on the communication network 7 may also be used. The specific device 6 is configured to be able to access the server 5B via the communication network 7 by inputting a preset password, for example.

In this system 1, the sensor 2 set in each fender 9 acquires the detection data M at preset time intervals (for example, every 1 hour, every 12 hours, every 24 hours, or the like) or at a preset time. A timing (interval) at which each sensor 2 acquires the detection data M is set to a desired timing. When the detection data M are acquired, the detection data M are sequentially transmitted to the relay device 5A by a radio wave W transmitted from the transceiver 3. The detection data M transmitted to the relay device 5A are sequentially transmitted from the relay device 5A to the server 5B via the communication network 7, and input and stored in the server 5B. The detection data M are transmitted together with identification information of the sensor 2 that has detected the detection data M, and the identification information of the sensor 2 is also input to the server 5B.

As the frequency at which the sensor 2 acquires the detection data M is increased and the detection data M are transmitted to the relay device 5A at shorter intervals, the power consumption of the battery 4 increases, but more recent detection data M can be acquired. As the frequency at which the sensor 2 acquires the detection data M is decreased and the detection data M are transmitted to the relay device 5A at longer intervals, the power consumption of the battery 4 is suppressed, but the most recent detection data M cannot be acquired. Therefore, an appropriate timing at which each sensor 2 acquires the detection data M is set according to an object to be managed.

In the server 5B, management indicators Mi for the fender 9 are calculated based on the input detection data M and stored. In the server 5B, unique information of each sensor 2 is stored in advance together with identification information thereof. The fender 9 on which each sensor 2 is installed is also specified, and information on product specifications, manufacturing history, and arrangement position of the fender 9 is also stored in the server 5B. In the server 5B, the management indicators Mi for the fender 9 are stored in association with various information on the fender 9. Therefore, when the server 5B is accessed, the management indicators Mi at a certain point in time for each fender 9 can be determined together with arrangement position, arrangement start time, and the like of each fender 9.

The detection data M may be stored as the management indicator Mi as it is, but instead of the detection data M or in addition to the detection data M, a data value obtained by processing the detection data M may be used as the management indicator Mi. For example, a difference between detected internal pressure data M and reference internal pressure data, a difference between detected temperature data M and reference temperature data, a difference between detected position data M and reference position data, and a difference between detected acceleration data M and reference acceleration data may be used as the management indicators Mi. The reference internal pressure data, the reference temperature data, the reference position data, and the reference acceleration data are set in advance as data when the fender 9 is normal. Therefore, the fender 9 can be determined to be in an abnormal state as the differences among the detection data M and the reference data increase.

A user or a supervisor of the fender 9, a person in charge of a manufacturer of the fender 9, or the like accesses the server 5B from the specific device 6, and thus the management indicators Mi stored in the server 5B are displayed on the specific device 6. Referring to the management indicators Mi displayed on a display of the specific device 6 enables determination of the states of internal pressure, temperature, position, external load of each fender 9, and the like.

Next, an example of a procedure of remotely managing the fender 9 using this system 1 will be described.

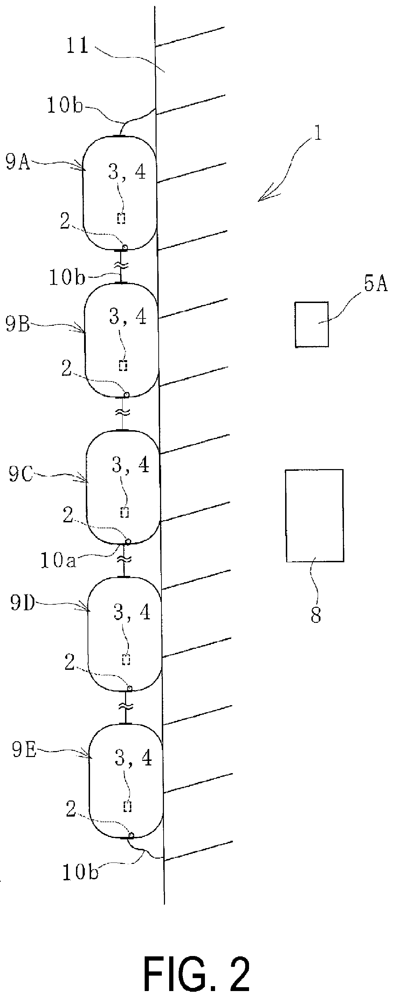

As illustrated in FIG. 2, a large number of fenders 9 are anchored to the quay 11 by a connecting rope 10b. Therefore, the large number of fenders 9 are arranged in a wide area. The relay device 5A is fixedly arranged at a predetermined position in an office building at a harbor, but may also be installed on a moving body 8, such as an automobile or a drone.

When the relay device 5A is fixed at a predetermined position, there is also a fender 9 arranged at a very long distance (for example, at a position separated by several hundred meters or more) from the relay device 5A. Therefore, when the detection data M detected by the sensor 2 installed on the fender 9 are transmitted from the transceiver 3 to the relay device 5A, a communication distance between the transceiver 3 and the relay device 5A may become excessively long.

When the transceiver 3 transmits the detection data M to the relay device 5A by the radio wave W and the transmission of the detection data M is not possible (the transmission fails), the transceiver 3 repeats the transmission until the transmission becomes possible. Therefore, if the communication distance between the transceiver 3 and the relay device 5A is excessively long, power consumption of the battery 4 for communication between the two devices increases, or communication becomes impossible. Under weather conditions such as wind and rain that make wireless communication unstable, even if the communication distance between the two devices is relatively short, the power consumption of the battery 4 for wireless communication between the two devices may increase, or communication may become impossible. If a method in which the relay device 5A is installed on the moving body 8 and moved close to the respective fenders 9 is adopted to secure stable wireless communication between the two devices, fuel is consumed for movement of the moving body 8.

Therefore, in this system 1, a communication route for the detection data M from each transceiver 3 to the relay device 5A is set such that a direct route Rd is selected when a communication strength S between each transceiver 3 and the relay device 5A is equal to or greater than a predetermined reference value Sc, and an indirect route Rb is selected when the communication strength S is less than the reference value Sc. The communication strength S is a degree of strength of the radio wave W received by the relay device 5A when the detection data M are transmitted to the relay device 5A by the radio wave W from each of the transceiver 3.

The reference value Sc is obtained by, for example, varying a separation distance between the transceiver 3 and the relay device 5A among a plurality of levels to change the communication strength S, and determining a strength of the radio wave W at which the relay device 5A cannot stably receive the detection data M. An upper limit value of the strength of the radio wave W thus determined is determined in advance as the reference value Sc. When the strength of the radio wave W is the reference value Sc, it corresponds to a level at which communication is barely established. When the detection data M are transmitted to the relay device 5A by the radio wave W from the transceiver 3 and the strength of the radio wave W received by the relay device 5A is less than the reference value Sc (reception is impossible), the indirect route Rb is selected without repeating transmission of the radio wave W.

The reference value Sc described above may be converted into a distance and replaced with a maximum value of the separation distance between the transceiver 3 and the relay device 5A at which the relay device 5A can always stably receive the detection data M. Therefore, a setting may be made such that, for the transceiver 3 having a separation distance from the relay device 5A greater than the reference value (distance reference value) Sc, the indirect route Rb is selected, and for the transceiver 3 having a separation distance from the relay device 5A smaller than the reference value (distance reference value) Sc, a direct route Rd is selected.

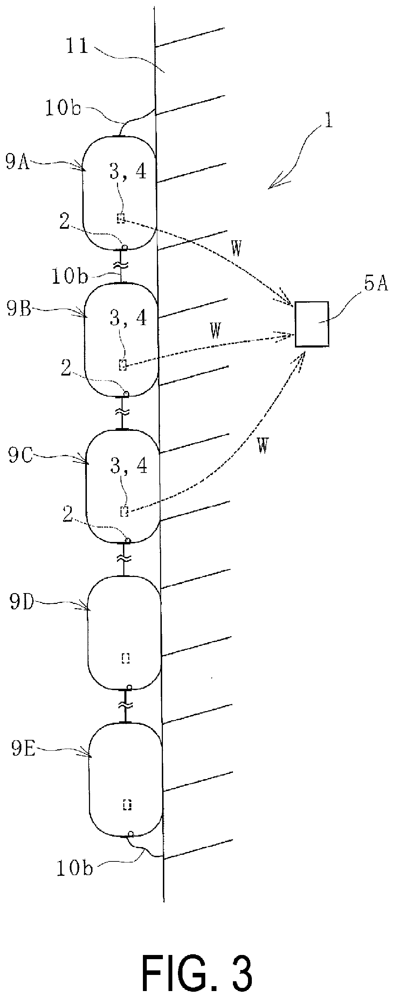

As illustrated in FIG. 3, the direct route Rd is a transmission route through which, when the detection data M are transmitted from the transceiver 3 to the relay device 5A, the detection data M are directly transmitted without the intervention of the transceiver 3 installed on another fender 9. The transceivers 3 installed on the fenders 9A, 9B, and 9C arranged at positions relatively close to the relay device 5A have a short communication distance to the relay device 5A. Therefore, the communication strength S at the relay device 5A of the radio wave W by which the transceivers 3 installed on the fenders 9A, 9B, and 9C have transmitted the detection data M becomes equal to or greater than the reference value Sc, and thus a direct route Rd is selected. That is, the detection data M are directly transmitted from the transceivers 3 installed on the fenders 9A, 9B, and 9C to the relay device 5A.

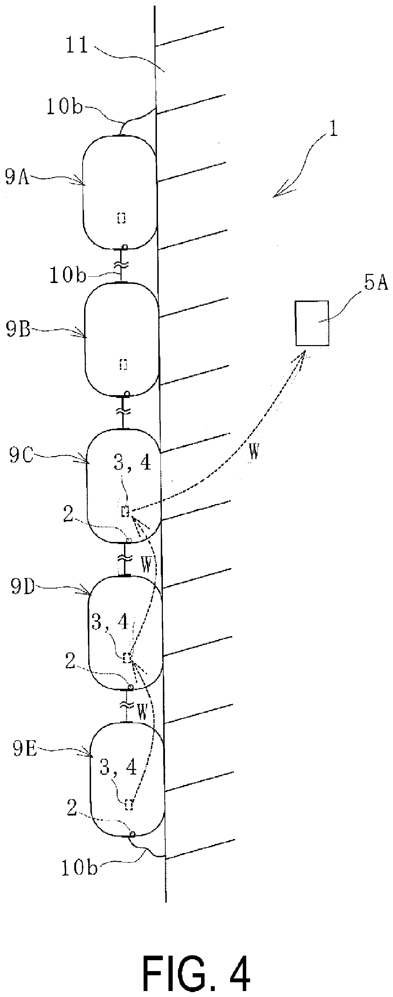

As illustrated in FIG. 4, the indirect route Rd is a transmission route through which, when the detection data M are transmitted from the transceiver 3 to the relay device 5A, the detection data M are transmitted via the transceiver 3 installed on at least one other fender 9 between the transceiver 3 and the relay device 5A. The transceivers 3 installed on the fenders 9D and 9E arranged at positions relatively far from the relay device 5A have a long communication distance to the relay device 5A. Therefore, the communication strength S at the relay device 5A of the radio wave W by which the transceivers 3 installed on the fenders 9D and 9E have transmitted the detection data M becomes less than the reference value Sc, and thus the indirect route Rb is selected. That is, the detection data M transmitted from the transceiver 3 installed on the fender 9D are transmitted to the relay device 5A via the transceivers 3 installed on one or more other fenders 9.

For the indirect route Rb, for example, a total length AL is calculated by sequentially connecting, with straight lines, a transceiver 3 serving as a start point of the indirect route Rb and a relay device 5A serving as an end point thereof via other transceivers 3 constituting the indirect route Rb serving as intermediate points, and summing lengths of the respective straight lines. Then, the indirect routes Rb are selected with priority given in ascending order of the calculated total length AL. However, an intermediate point immediately preceding the relay device 5A is set to be a transceiver 3 installed on a fender 9 (9A, 9B, 9C), having a short communication distance to the relay device 5A, and being capable of forming a direct route Rd.

Taking the case of FIG. 4 as an example, the indirect route Rb from the transceiver 3 installed on the fender 9E serving as a start point to the relay device 5A serving as an end point is examined as follows. First, since the transceivers 3 that can form the direct route Rd with the relay device 5A are the fenders 9A, 9B, and 99C, the transceiver 3 installed on any one fender 9 of the fenders 9A to 9C becomes an intermediate point immediately preceding the relay device 5A.

The intermediate points are the transceivers 3 installed on the fenders 9D, 9C, 9B, and 9A. Accordingly, the indirect routes Rb include three routes, that is, a route (first route) in which the transceivers 3 installed on the fenders 9D and 9C are sequentially set as intermediate points, a route (second route) in which the transceivers 3 installed on the fenders 9D, 9C, and 9B are sequentially set as intermediate points, and a route (third route) in which the transceivers 3 installed on the fenders 9D, 9C, 9B, and 9A are sequentially set as intermediate points. When the respective total lengths AL of the first to third routes are compared, the first route is the shortest and the third route is the longest. Therefore, the order of priority of the indirect routes Rb is the first route, the second route, and the third route.

Then, when the detection data M are transmitted from the transmitting/receiving terminal device 3 serving as a start point to the relay device 5A, the indirect route Rb having a shorter total length AL is preferentially selected, and transmission is attempted sequentially from the indirect routes Rb having higher priority. If the detection data M can be successfully transmitted from the transmitting/receiving terminal device 3 installed on the fender 9E to the relay device 5A through the indirect route Rb having the highest priority (the first route), the transmission of the detection data M is completed. If the detection data M cannot be transmitted to the relay device 5A through the indirect route Rb having the highest priority, the indirect route Rb having the second highest priority (the second route) is attempted. If the detection data M can be successfully transmitted to the relay device 5A through the indirect route Rb having the second highest priority, the transmission of the detection data M is completed. In this manner, the transmission of the detection data M is attempted in order of the indirect routes Rb having higher priority until the detection data M can be successfully transmitted to the relay device 5A.

In FIG. 4, when the detection data M are transmitted from the transceiver 3 installed on the fender 9D serving as a start point to the relay device 5A, the indirect route Rb in which the detection data M are transmitted from this transceiver 3 to the relay device 9C via the transceiver 3 installed on the fender 5A and serving as an intermediate point is selected with the highest priority. In this manner, a setting such that the indirect route Rb having a shorter total length AL is preferentially selected is advantageous in reducing the power consumption of each battery 4.

According to the above-described system 1, communication based on the unlicensed LPWA communication standard is performed between the transceiver 3 installed on each fender 9 and the relay device 5A, and thus it is possible to construct a highly flexible communication route network avoiding legal restrictions on wireless communication between the two devices. In addition, the direct route or the indirect route is selected as each transmission route for the detection data from each transceiver 3 to the relay device 5A, based on the communication strength between the two devices. Therefore, repetition of unnecessary communication failures is eliminated, and the power consumption of the battery 4 installed on each fender 9 can be suppressed. Since the necessity of installing the relay device 5A on the moving body 8 and moving the moving body 8 close to each transceiver 3 (fender 9) in order to secure stable wireless communication with the relay device 5A is reduced, fuel consumption associated with movement of the moving body 8 is also suppressed. As a result, it becomes possible to determine a state of each fender 9 more reliably while reducing energy consumption in a determining step of determining the state of each fender 9.

Since a large number of fenders 9 are also installed on a ship anchored on the quay 11, the above-described system 1 can also be applied to determining states of the fenders 9. The above-described system 1 can also be applied to determining states of a large number of fenders 9 anchored on facilities at sea. In this case, in order to install the relay device 5A on a ship serving as the moving body 8 and to move the ship close to the respective fenders 9, fuel consumption associated with movement increases, since the moving body 8 is a ship. Therefore, in this case, by using the system 1, the fuel consumption of the moving body 8 can be minimized, and thus it becomes highly advantageous for reducing the energy consumption in a determining step of determining the state of each fender 9.

Since the system 1 includes, as essential components, the sensor 2 and the transceiver 3 installed on each fender 9 and the relay device 5A, the system 1 can be easily applied by installing these essential components on existing fenders 9. Therefore, by applying the system 1, it becomes possible to accurately and stably determine the states of a large number of fenders 9 already installed on the quay 11, ships, or the like. Of course, the system 1 can also be applied by equipping new fenders 9 with the above essential components. Attachment work of the sensor 2 and the transceiver 3 to new fenders 9 can be performed more smoothly at a manufacturing factory or a stock location of the fenders 9.

When the communication between each transceiver 3 and the relay device 5A is based on the LoRaWAN communication standard, mutual communication between the two devices can be performed extremely freely without being subject to legal restrictions. Therefore, for example, by issuing, from a specific device 6a of a management supervisor to each transceiver 3, an instruction to change an acquisition timing of the detection data M by the sensor 2 or an instruction to change a frequency at which the transceiver 3 transmits the detection data M to the relay device 5A, these settings can be easily changed.

When the detection data M are transmitted from the transceiver 3 to the relay device 5A, a modulation scheme suitable for a use environment of a management object (fender 9) may be adopted for the radio wave W to be transmitted. Examples of the modulation scheme include CSS (chirp spread spectrum) and FHSS (frequency hopping spread spectrum). When CSS is adopted as a modulation scheme, electromagnetic interference can be made extremely small and interception becomes difficult, and therefore CSS is considered to be suitable for wireless communication in an at-sea environment.

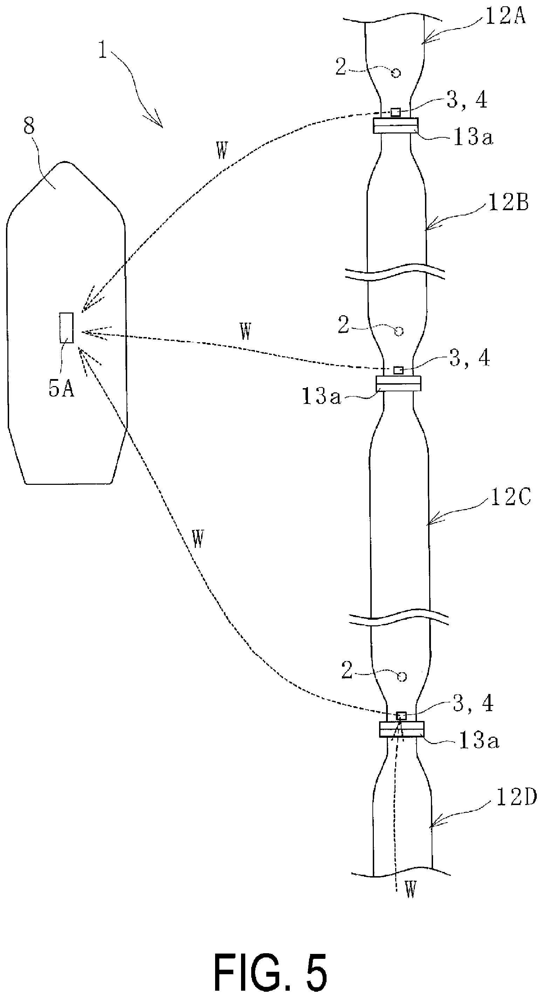

In an embodiment of the system 1 illustrated in FIG. 5, a plurality of marine hoses 12 (12A, 12B, 12C, 12D, ...) constituting a hose line extending while floating on the sea are management objects. Each marine hose 12 is a hollow body made of rubber in which a reinforcing layer is embedded, and various known specifications may be used. Each marine hose 12 has flanges 13a at both ends in a longitudinal direction, and the adjacent marine hoses 12 are connected to each other via the flanges 13a facing each other.

Each marine hose 12 is provided with the sensor 2 and the transceiver 3.

The relay device 5A may be fixedly arranged at a predetermined position in an office building at a harbor, but is installed on a watercraft serving as the moving body 8 in this embodiment. The sensor 2 is installed inside the marine hose 12 or the surface thereof. The transceiver 3 is installed on the surface of the marine hose 12 in the vicinity of the flange 13a. Examples of the sensor 2 installed on the marine hose 12 include a pressure sensor that detects an internal pressure of the marine hose 12 as the detection data M, a temperature sensor that detects an internal temperature, a position sensor such as a GPS receiver that detects a position of the marine hose 12, and an acceleration sensor that detects an acceleration (external force) acting on the marine hose 12.

A procedure for remotely managing the marine hose 12 by the system 1 is the same as that for the fender 9 described above. When a fluid flowing through the marine hose 12 leaks from a flow channel of the marine hose 12, a change (abnormality) occurs in the internal pressure data and the internal temperature data, which are the detection data M. Therefore, in this embodiment, the presence or absence of leakage of the fluid flowing through the marine hose 12 from the flow cannel of the marine hose 12 can be determined by the management indicators Mi based on the internal pressure data and the internal temperature data.

Since a hose line formed by the marine hose 12 is extremely long (for example, 1 km or more), when the detection data M are transmitted from the respective transceivers 3 to the relay device 5A by wireless communication, selection of a direct route Rd and the indirect route Rb as appropriate is highly effective for suppressing power consumption of the battery 4. For example, when the relay device 5A is moved to a position in the vicinity of one end portion of the hose line and fixed, and the indirect route Rb is used, the detection data M can be reliably transmitted from each transceiver 3 to the relay device 5A. That is, the detection data M can be reliably transmitted also from a transceiver 3 arranged at the other end portion of the hose line to the relay device 5A fixed in the vicinity of one end portion of the hose line.

When the moving body 8 (watercraft) on which the relay device 5A is installed is moved close to the marine hose 12 that is used while floating on the sea in order to secure stable wireless communication between the transceiver 3 and the relay device 5A, the moving body 8 consumes a corresponding amount of fuel. Therefore, by applying the system 1 to suppress the movement of the moving body 8, the fuel consumption by the moving body 8 is reduced. As a result, it becomes more advantageous for reducing energy consumption in a determining step of determining the state of each fender 9. When the relay device 5A moves, a position of the relay device 5A (the moving body 8) at which the detection data M are transmitted from each transceiver 3 to the relay device 5A may be set in advance.

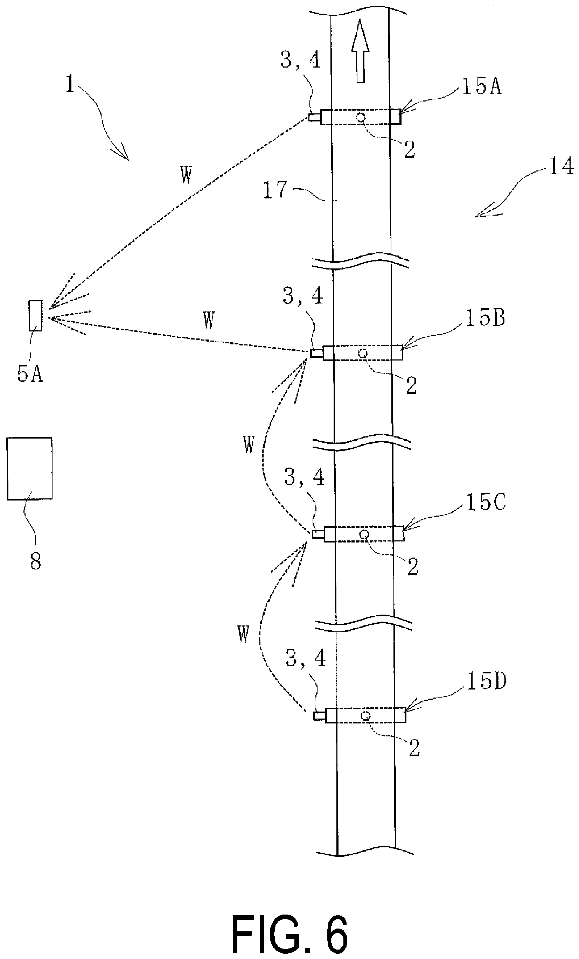

In an embodiment of the system 1 illustrated in FIG. 6, a plurality of belt support mechanisms 15 (15A, 15B, 15C, 15D,.) of a belt conveyor device 14 forming an extending conveyor belt line are management objects. The belt support mechanisms 15 are arranged at intervals in a belt longitudinal direction.

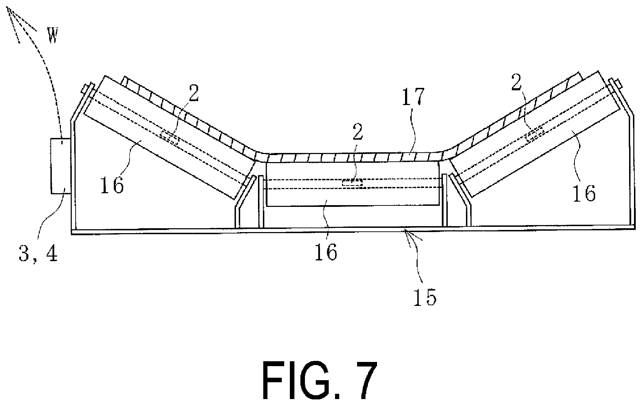

As illustrated in FIG. 7, each belt support mechanism 15 includes a plurality of support rollers 16 on which a conveyor belt 17 is placed, and three support rollers 16 arranged side by side in a belt width direction support the conveyor belt 17 in a bowl shape protruding downward. The belt support mechanisms 15 may employ various known specifications. A conveyed object is placed on the conveyor belt 17 and transported to a conveying destination.

Each belt support mechanism 15 is provided with the sensor 2 and the transceiver 3. The relay device 5A is fixedly arranged at a predetermined position in a management office or the like, but may also be installed on the moving body 8, such as an automobile or a drone. The sensor 2 is installed on the support roller 16. The transceiver 3 is installed on a frame of the belt support mechanism 15 together with the battery 4. Examples of the sensor 2 installed on the belt support mechanism 15 include a pressure sensor such as a load cell that detects a pressure acting on the support roller 16, a temperature sensor that detects a temperature of the support roller 16, and the like. The sensor 2 may be installed, for example, on one support roller 16 at a central portion in the belt width direction, instead of being installed on all the support rollers 16.

Since the detection data M of each of the pressure data and the temperature data detected by the sensor 2 indicate a load state and a temperature state of the conveyed object with respect to the belt support mechanism 15 on which the sensor 2 is installed, the detection data M can be regarded as indicating a load state and a temperature state of the conveyed object with respect to the conveyor belt 17 of the belt support mechanism 15. Therefore, in this embodiment, a placement load state of the conveyed object with respect to the conveyor belt 17 can be determined by the management indicator Mi based on the pressure data M. A temperature state of the conveyed object with respect to the conveyor belt 17 can be determined by the management indicator Mi based on the temperature data M.

A procedure for remotely managing the belt support mechanism 15 (the conveyor belt 17) by the system 1 is the same as that for the fender 9 described above. In this embodiment, since the pressure data M acting on each of the support rollers 16 arranged in the belt width direction are acquired, a magnitude of differences among the respective pressure data M can be determined. Generally, since the conveyed object is placed on a central portion in the width direction of the conveyor belt 17, the pressure data M regarding the support roller 16 arranged at the central portion in the width direction are greater than the pressure data M regarding the support roller 16 arranged at an end portion in the width direction. However, when the conveyor belt 17 meanders, a balance among the pressure data M regarding the respective support rollers 16 is disrupted, and, for example, the pressure data M regarding the support roller 16 arranged at one end portion in the belt width direction increase more than usual. Therefore, it becomes possible to determine the presence or absence of meandering of the conveyor belt 17 based on the change in the magnitude of the differences among the pressure data M regarding the respective support rollers 16.

The conveyor belt line by the belt conveyor device 14 may be extremely long (for example, 1 km or more). Therefore, when the detection data M are transmitted from the respective transceivers 3 to the relay device 5A by wireless communication, selection of a direct route Rd and the indirect route Rb as appropriate is highly effective for suppressing power consumption of the battery 4. In this embodiment, the same remote management as that for the marine hose 12 described above can be performed, and the same effects can be obtained.

### Reference Signs List

1 Remote management system
2 Sensor
3 Transmitting/receiving terminal device
4 Battery
5A Relay device
5B Server
6 (6a, 6b, 6c) Specific device
7 Communication network
8 Moving body
9 (9A, 9B, 9C, 9D, 9E) Pneumatic fender (object)
10 Mouthpiece
10b Connecting rope
11 Quay
12 (12A, 12B, 12C, 12D) Marine hose (object)
13 Flange
14 Belt conveyor device
15 (15A, 15B, 15C, 15D) Belt support mechanism (object)
16 Support roller
17 Conveyor belt
W Radio wave

## Claims

1. A remote management system for an object, comprising:
a sensor and a transceiver installed on an object; and
a relay device connected to a communication network;
communication based on a predetermined LPWA communication standard being performed between the transceiver and the relay device;
the sensor and the transceiver being operated by a battery, detection data indicating a state of the object detected by the sensor being transmitted by the transceiver to the relay device and transmitted to the communication network via the relay device, and the management indicator based on the detection data being displayed on a specific device connected to the communication network;
the sensor and the transceiver being installed on each of a plurality of the objects, and
the transmission route for the detection data from each transceiver to the relay device being set such that a direct route from each transceiver to the relay device is selected when a communication strength between each transceiver and the relay device is equal to or greater than a preset reference value and that an indirect route in which at least one other transceiver is interposed between each transceiver and the relay device is selected when the communication strength is less than the reference value.

2. The remote management system for an object according to claim 1,
wherein
the indirect route is obtained by sequentially connecting, with straight lines, the transceiver, which is a start point of the indirect route and the relay device, which is an end point of the indirect route via other transceivers constituting the indirect route as intermediate points, and
an intermediate point immediately preceding the relay device is selected by using a transceiver installed on the fender and capable of forming the direct route, calculating a total length of each of the straight lines, and giving priority in ascending order of the total length calculated.

3. The remote management system for an object according to claim 1 or 2, wherein the object is a fender, a marine hose, or a belt support mechanism constituting a belt conveyor device.

4. A remote management method for an object, comprising:
installing a sensor and a transceiver on an object;
performing communication based on a predetermined LPWA communication standard between the transceiver and a relay device connected to a communication network;
operating the sensor and the transceiver by a battery;
transmitting, by the transceiver, detection data detected by the sensor and indicating a state of the object to the relay device;
transmitting the detection data to the communication network via the relay device; and
displaying the management indicator based on the detection data on a specific device connected to the communication network;
the method comprising:
installing the sensor and the transceiver on each of a plurality of the objects;
for a transmission route for the detection data from each transceiver to the relay device,
selecting a direct route from each transceiver to the relay device when a communication strength between each transceiver and the relay device is equal to or greater than a preset reference value; and
selecting an indirect route in which at least one other transceiver is interposed between each transceiver and the relay device when the communication strength is less than the reference value.
